**Europäisches Patentamt**

**European Patent Office**

**Office européen des brevets**

(11) Veröffentlichungsnummer: **0 440 012 A1**

## (12) EUROPÄISCHE PATENTANMELDUNG

(21) Anmeldenummer: **91100008.1**

(22) Anmeldetag: **02.01.91**

(51) Int. Cl.5: **G01L 1/00, G01L 5/00**

(30) Priorität: **01.02.90 DE 4002910**

(43) Veröffentlichungstag der Anmeldung:
**07.08.91 Patentblatt 91/32**

(84) Benannte Vertragsstaaten:
**AT BE CH DE ES FR GB IT LI NL**

(71) Anmelder: **Pfister Messtechnik GmbH**
**Stätzlinger Strasse 70**
**W-8900 Augsburg(DE)**

(72) Erfinder: **Häfner, Hans Wilhelm**
**Fichtenweg 15**
**W-8890 Aichach-Walchshofen(DE)**

(74) Vertreter: **Kahler, Kurt**
**Patentanwalt Dipl.-Ing. Kurt Kahler**
**Gerberstrasse 3 Postfach 1249**
**W-8948 Mindelheim(DE)**

(54) **Kraftmesseinrichtung.**

(57) Kraftmeßeinrichtung, bei der zur einfachen Herstellung und zur Erreichung einer geringen Bauhöhe, sowie hoher Meßgenauigkeit auch bei schräg oder dezentral angreifenden Kräften ein Übertragungsmedium (11), insbesondere Silikonöl, in einen ringförmigen Zwischenraum (12), insbesondere einen Ringschlauch (12a), eingeschlossen wird. Hierdurch wird auch bei Verkanten zwischen einem starren Außen- und Innenteil (4, 5) eine gleichmäßige Druckbelastung eines seitlich angesetzten Kraft- bzw. Druckmeßsensors (8) erreicht.

FIG.1

EP 0 440 012 A1

Die Erfindung betrifft eine Kraftmeßeinrichtung gemäß dem Oberbegriff des Patentanspruchs 1, sowie ein Verfahren zu deren Herstellung.

Eine derartige Kraftmeßeinrichtung ist aus der WO 89/07055 bekannt, wobei insbesondere die Anwendung einer derartigen Kraftmeßeinrichtung für die elastische Lagerung und Verbindung eines Federbeines an einem Kraftfahrzeug beschrieben wird. Die Kraftmeßeinrichtung besteht dabei aus einem ringförmigen Innenteil und ringförmigen Außenteil, die zwischen sich eine Ringstufe ausbilden, die mit Elastomer gefüllt ist. Das Übertragungsmedium besteht hierbei aus einer Flüssigkeit, insbesondere Silikonöl, das durch eine Einfüllöffnung in den Bereich zwischen dem Elastomer und dem Kraftmeßsensor eingefüllt wird und somit eine proportionale Kraftübertragung auf den seitlich angesetzten Sensor gewährleisten soll. Damit die Übertragungsflüssigkeit den kleinvolumigen Zwischenraum unterhalb des Meßsensors und dessen Anschlußgewinde (Stichbohrung) vollkommen ausfüllt, ist entweder das Einfüllen eines definierten Volumens der Flüssigkeit erforderlich oder der Kraftmeßsensor wird so weit eingeschraubt, bis die überschüssige Flüssigkeit austritt.

Beide Verfahren sind relativ schwierig durchzuführen, da sie für das sehr geringe Volumen zwischen Meßsensor und Elastomer in der Stichbohrung ein hohes Maß an Einfüllgenauigkeit der Übertragungsflüssigkeit erfordern.

Insbesondere bei derartigen seitlich von der Zentralachse angesetzten Kraft- bzw. Druckmeßsensoren besteht die Gefahr, daß bei außermittig angreifenden Kräften oder schräg zur Achse der Kraftmeßeinrichtung eingeleiteten Kräften das Innenteil relativ zum Außenteil verkantet, so daß eine ungleiche Verteilung der Kraft bzw. des Druckes auftreten kann. Dadurch wird das Meßergebnis verfälscht, so daß für eine hohe Meßgenauigkeit eine relativ große Führungslänge des engen Ringspaltes erforderlich ist. Bei sehr vielen Anwendungsfällen, wie beispielsweise bei der Federbeinlagerung ist jedoch im Interesse eines möglichst niedrigen Vorderbaues eines Kraftfahrzeuges auch eine niedrige Bauhöhe der Kraftmeßeinrichtung erwünscht.

Demzufolge liegt der Erfindung die Aufgabe zugrunde, eine Kraftmeßeinrichtung zu schaffen, die bei geringer Bauhöhe eine hohe Meßgenauigkeit auch bei außermittig angreifenden Kräften aufweist, sowie ein einfaches Herstellungsverfahren hierfür anzugeben.

Diese Aufgabe wird gelöst durch eine Kraftmeßeinrichtung gemäß dem Patentanspruch 1, sowie durch ein Verfahren mit den Merkmalen des Patentanspruches 9 bzw. 10.

Durch das Einschließen des Übertragungsmediums in einen ringförmigen Zwischenraumes ergibt sich selbst bei ungleicher Belastung durch die hydrostatische Druckverteilung innerhalb des eingeschlossenen Übertragungsmediums eine entsprechend ausgeglichene Belastung des Kraftbzw. Druckmeßsensors, so daß dieser auch asymmetrisch seitlich von der Krafteinleitung ohne Beeinträchtigung der Meßgenauigkeit angeordnet werden kann. Dadurch wird weiterhin ermöglicht, die Führungslänge durch das elastomere Material innerhalb des engen Ringspaltes zu reduzieren, so daß sich eine niedrigere Bauhöhe der Kraftmeßeinrichtung ergibt. Durch die gleichmäßige Druckverteilung aufgrund des in den Zwischenraum hermetisch eingeschlossenen Übertragungsmediums können dabei sogar Schrägstellungen des Innenteils relativ zum Außenteil zugelassen werden, wobei das im umlaufenden Zwischenraum eingeschlossene Übertragungsmedium (Flüssigkeit oder niederviskoses Gel) als Ausgleichs- und Druckverteilschicht wirkt. In bevorzugter Ausführung ist das Übertragungsmedium, z. B. Silikonöl in einer ringschlauchartigen flexiblen Hülle eingeschlossen, so daß das Einbringen des Übertragungsmediums in die Kraftmeßeinrichtung sehr einfach durchzuführen ist, da die Hülle als flexibler Behälter des Übertragungsmediums dient und somit ein definiertes Volumen an Übertragungsflüssigkeit bereits bei der Herstellung der Kraftmeßeinrichtung eingebracht werden kann.

Bei dem zugehörigen Herstellungsverfahren ist durch das Einschließen des Übertragungsmediums in einer flexiblen Hülle eine aufrechte Lage der Kraftmeßeinrichtung nicht mehr unbedingt erforderlich, sondern die flexible Hülle kann vielmehr zusammen mit dem Übertragungsmedium in beliebiger Lage zwischen das Außen- und Innenteil der Kraftmeßeinrichtung eingelegt werden. Entsprechendes gilt für die Bildung des Übertragungsmediums aus einem niedrigviskosen Gel, das als Ring geformt im Bereich der Ringstufe bevorzugt in eine vertiefte Ringnut eingelegt wird.

In bevorzugter Ausgestaltung verschließt die flexible Hülle bzw. der Gelring die Anschlußöffnung des Kraftmeßsensors und deckt diese beim Einfüllen und anschließenden Aushärten des elastomeren Materials ab, so daß zusätzliche Abdichtmaßnahmen entfallen können. Durch Einsetzen des Kraft- bzw. Druckmeßsensors, dessen Meßmembran direkt auf der flexiblen Hülle des Übertragungsmediums anliegt, wird die Kraftmeßeinrichtung fertiggestellt. Im Gegensatz zu der vorbekannten Lösung mit einer erst nach dem Aushärten des Elastomers eingefüllten Übertragungsflüssigkeit ist durch den Einschluß des Übertragungsmediums in der flexiblen Hülle der Austausch des Kraft- bzw. Druckmeßsensors auch in einer Überkopfstellung möglich, da das Übertragungsmedium durch den Einschluß in der flexiblen Hülle bzw. als Gelring nicht auslaufen kann. Somit sind die Kraft- bzw.

Druckmeßsensoren auch durch seitliche, waagrechte oder sogar sich nach unten erstreckende Anschlußöffnungen am Innen- oder Außenteil anschließbar.

Von besonderer Bedeutung ist die Füllung des ringsumlaufenden Zwischenraumes mit einer Übertragungsflüssigkeit wie Silikonöl. Zur Bildung dieses ringförmigen Hohlraumes wird nur der enge Ringspalt in zwei Stufen mit elastomerem Material gefüllt, wobei zunächst der untere Ringspalt und dann der obere, nach Wenden dann untenliegende Ringspalt vulkanisiert wird, so daß im breiteren Ringstufenbereich ein ringförmiger Hohlraum entsteht. Dieser hohle Übergangsringraum wird dann mit Silikonöl gefüllt und der Meßsensor eingesetzt.

Zur Bildung des ringförmigen Hohlraumes zwischen oberem und unterem Ringspalt kann jedoch auch nach Art eines Gußkerns ein Ring eingelegt werden, der nach Aushärten des Elastomers durch Ausätzen oder Ausspülen durch die Sensoröffnung oder eine andere verschließbare Bohrung aus dem Bereich der Ringstufe entfernt wird. Der damit entstandene Ringhohlraum wird schließlich durch die Sensoreinsetzöffnung mit Übertragungsflüssigkeit gefüllt und schließlich der Sensor eingeschraubt.

Desweiteren ist es zur Bildung des ringförmigen Zwischenraumes möglich, das Innenteil und Außenteil etwa auf Höhe der Ringstufe horizontal zu teilen, den oberen und unteren Ringspalt gesondert zu vulkanisieren und dann die beiden Hälften zusammenzubauen, so daß ebenfalls ein ringförmiger Hohlraum verbleibt. Schließlich wird dann wiederum Übertragungsflüssigkeit eingefüllt.

Weitere vorteilhafte Ausgestaltungen sind Gegenstand der abhängigen Ansprüche.

Weitere Merkmale und Vorteile der Erfindung ergeben sich aus der nachfolgenden Beschreibung zweier Ausführungsbeispiele anhand der Zeichnung. Es zeigen:

Fig. 1  einen Querschnitt durch eine Ausführungsform einer Kraftmeßeinrichtung, die an einem Federbeindom eines Kraftfahrzeuges angebaut ist.

Fig. 2  einen Querschnitt durch eine zweite Ausführungsform.

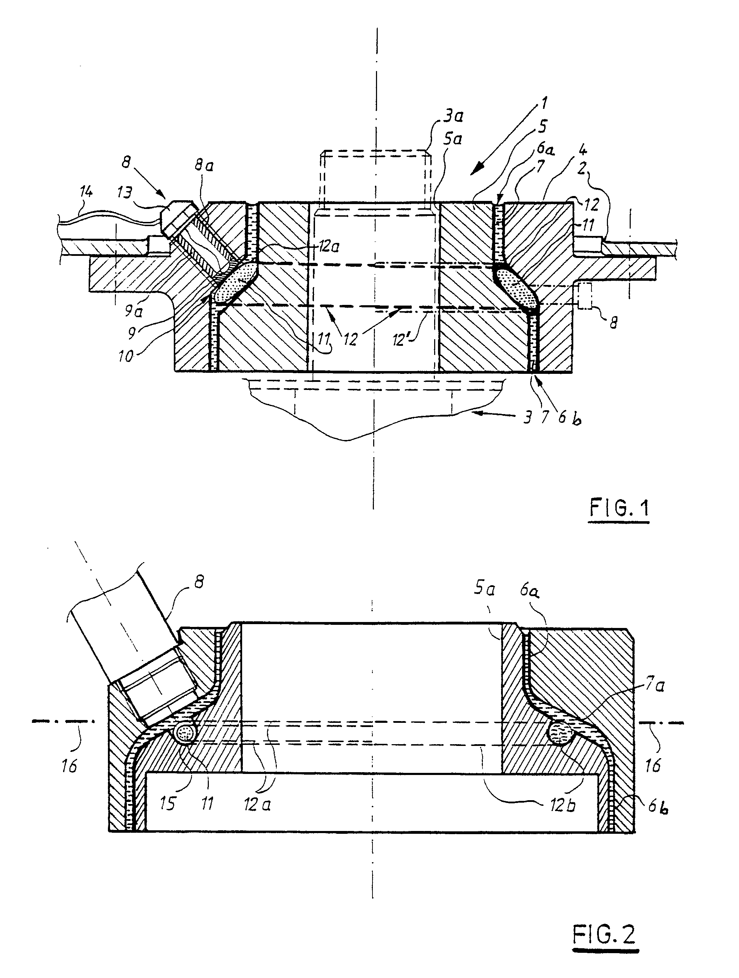

In Fig. 1 ist eine Kraftmeßvorrichtung 1 z. B. in einem Federbeindom 2 eines Kraftfahrzeuges mittels nicht näher gezeigter Schrauben befestigt und dient zur Aufnahme eines in Strichlinien dargestellten Federbeines 3. Die Kraftmeßeinrichtung 1 besteht im wesentlichen aus einem topfförmigen Außenteil 4, das mit dem Federbeindom 2 verbunden ist und einem kolbenartigen Innenteil 5, wobei zwischen dem Innenteil 5 und dem Außenteil 4 ein enger Ringspalt gebildet ist, der hier aus Gründen der Übersichtlichkeit etwas weiter dargestellt ist. Der hier obere und untere Ringspalt 6a bzw. 6b ist von einem elastomeren Material 7, insbesondere Silikon oder Naturkautschuk ausgefüllt. Mittig im Innenteil 5 ist in einer Durchgangsöffnung 5a eine Kolbenstange 3a des Federbeines 3 hindurchgeführt. Als Meßwandler der Kraftmeßeinrichtung 1 ist ein Sensor 8 vorgesehen, der an seinem vorderen Ende eine Membran 9 aufweist, die im Bereich einer schrägen Ringstufe 10 zwischen Außenteil 4 und Innenteil 5 angeordnet ist. Im Bereich dieser umlaufenden Ringstufe 10 ist ein Übertragungsmedium 11 eingefügt, das in einen ringsumlaufenden Übergangsraum 12 eingeschlossen ist.

Bei der hier vorliegenden Ausführungsform der Kraftmeßvorrichtung mit einer zentralen Durchlaßöffnung 5a ist der Übergangsraum 12 durch eine flexible Hülle 12a in Form eines Ringschlauches begrenzt, der das Übertragungsmedium 11, insbesondere ein Silikonöl oder ein gelartiges Silikon in sich aufnimmt. Bei Belastung der Kraftmeßeinrichtung 1, bei dem hier vorliegenden Ausführungsbeispiel aufgrund der statischen oder dynamischen Radlast auf das Federbein 3, wird durch das Innenteil 5 der zwischen dem oberen und unteren Ringspalt 6 liegende Bereich der schrägen Ringstufe 10 belastet, wobei das dort befindliche Übertragungsmedium 11 die Membran 9 des Kraft- bzw. Druckmeßsensors 8 beaufschlagt. Die Membran 9 weist bevorzugt in Dickschichttechnologie aufgebrachte Dehnmeßstreifen auf, jedoch können auch andere bekannte Meßwandler vorgesehen sein. Die von der Membran 9 aufgenommenen Meßwerte werden innerhalb eines Sensorhalters 9a an einen Meßwertverstärker 13 im Sensor 8 weitergeleitet und können beispielsweise über eine Leitung 14 einem Bordcomputer zur weiteren Datenverarbeitung zugeführt werden.

Die flexible Hülle 12a besteht bei diesem Ausführungsbeispiel aus einem Gummischlauch, der das Übertragungsmedium 11 in sich aufnimmt. Die Hülle 12a ist an den Übergangsraum 12 zwischen dem Innenteil 5 und dem Außenteil 4 angepaßt und steht mit dem Sensor 8 in Verbindung. Der Kraft- bzw. Druckmeßsensor 8 kann dabei auch in waagrechter Ausrichtung an das Übertragungsmedium 11 herangeführt sein, wie dies in der rechten Hälfte von Fig. 1 in Strichpunktlinien angedeutet ist. Das Übertragungsmedium 11 besteht bevorzugt aus niedrigviskosem Silikonöl, so daß sich bei Belastung der Kraftmeßeinrichtung 1 innerhalb des Übergangsraumes 12 auch bei außermittiger Belastung oder bei schräg angreifender Kraftrichtung und damit verursachten Verkanten des Innenteils 5 gegenüber dem Außenteil 4 ein gleichbleibender Druck ausbildet. Somit kann der Sensor 8 an nahezu beliebiger Stelle der Kraftmeßeinrichtung 1 angebracht werden kann.

Als Übertragungsmedium 11 kann jedoch auch ein nahezu gelartiges Silikon mit etwa 40 Shore-Härtegraden dienen, das bevorzugt als Gelring 12b (rechte Hälfte von Fig. 2) und ähnlich wie die Hülle 12a in die Ringstufe 10 eingelegt ist und somit einen hochflexiblen Übergangsraum 12 ausbildet. Auch kann die Hülle 12a bei kleinerem Querschnitt oder größerer Ringstufe 10 vom elastomeren Material 7 vollständig umgeben sein, so daß zwischen der Membran 9 und der Hülle 12 eine Zwischenschicht 7a aus elastomerem Material 7 zwischengeschaltet ist. (vgl. Fig. 2).

Bei der Herstellung derartiger Kraftmeßeinrichtungen 1 wird das Übertragungsmedium 11 in die flexible Hülle 12a eingeschlossen, so daß diese in Art eines Dichtungsringes über das Innenteil 5 gestreift wird und somit zwischen Innenteil 5 und Außenteil 4 gelegt werden kann. Bevorzugt überdeckt dabei der Querschnitt der Hülle 12 die Einsetzöffnung 8a des Sensors 8, so daß beim Einfüllen der elastomeren Masse 7 die Einsetzöffnung 8a nicht gesondert abgedichtet werden muß. Die elastomere Masse 7 besteht bevorzugt aus Silikon oder aus Naturkautschuk, das fest an den Kontaktflächen im Ringspalt 6 anhaftet, bevorzugt aufvulkanisiert wird. Durch den oberhalb und unterhalb der schrägen Ringstufe 10 angeordneten, mit elastomerer Masse 7 gefüllten Ringspalt 6 ergibt sich auch bei kurzen Führungslängen eine sichere Führung des Innenteils 5 im Außenteil 4. Insbesondere werden dadurch Meßungenauigkeiten durch Querkräfte praktisch ausgeschlossen. Die elastomere Masse 7 steht dabei in bevorzugter Ausführung in direktem Kontakt mit der flexiblen Hülle 12a des Übertragungsmediums 11 und ist mit dieser zusammenvulkanisiert. Bei der Anwendung von Flüssigkeit als Übertragungsmedium 11, das durch die Einsetzöffnung 8a des Sensors 8 in den ringförmigen Übergangsraum 12 eingefüllt wird (also ohne flexible Hülle 12a) ist jedoch die elastomere Masse 7 auf den zylindrischen Teil des Ringspaltes 6 oberhalb und unterhalb der schrägen Ringstufe 10 beschränkt, wie dies als Alternative in der rechten Hälfte der Fig. 1 dargestellt ist. Bei dieser Ausführung wird vor dem Vulkanisieren des oberen und unteren Ringspaltes 6 im Bereich der Ringstufe 10 ein ebenfalls ringförmiger Einsatz 12', der hier strichpunktiert dargestellt ist, eingelegt. Nach dem Aushärten des Elastomers 7 im Ringspalt 6 wird der Einsatz 12' ausgeschmolzen oder ausgespült und in den dann strichliert gezeichneten verbleibenden ringförmigen Übergangsraum 12 die Übertragungsflüssigkeit 11 eingefüllt. In gleichwirkender Weise kann die Hülle 12a nach dem Einlegen in die Kraftmeßeinrichtung 1 und dem Verschließen des oberen und unteren Ringspaltes 6 mit der elastomeren Masse 7 auch aufgelöst werden. Dies kann einerseits beim Vulkanisieren der elastomeren Masse 7 durch Hitze erfolgen, indem die Umhüllung 12a aus einem nur gering-temperaturbeständigen Material besteht. Eine andere Möglichkeit bestünde darin, das Material der flexiblen Hülle 12a derart zu wählen, daß es sich im Kontakt mit dem elastomeren Material 7 chemisch zersetzt und auflöst. In beiden Fällen ist das Übertragungsmedium 11 dann als Flüssigkeitspolster im Übergangsraum 12 von oben und von unten her durch die elastomere Masse 7 im Ringspalt 6 begrenzt, dicht eingeschlossen. Soll die Hülle 12 selbst bei starken Verkantungen nicht beschädigt werden, so bietet sich eine konkave Ausrundung der Flächen der Ringstufe 10 für die im Querschnitt etwa linsenförmige Hülle 12a an.

In Fig. 2 ist eine zweite Ausführungsform dargestellt, bei der auf der linken Seite, ebenso wie in Fig. 1, die Umhüllung des Übertragungsmediums 11 durch die Hülle 12a im Querschnitt gezeigt ist, während in der rechten Hälfte der Gelring 12b dargestellt ist. Beide sind hier in einer Ringnut 15 versenkt angeordnet, so daß zwischen Sensor 8 und der Hülle 12a (bzw. dem Gelring 12b) eine Zwischenschicht 7a aus festanhaftenden elastomeren Material 7 vorgesehen ist. Bei dieser Ausführung kann der obere und untere Ringspalt 6 in einem Arbeitsschritt gleichzeitig gefüllt und vulkanisiert werden, wobei der Ringschlauch 12a bzw. der Gelring 12b auch bei hohen Vulkanisierdrücken durch die Verankerung in der Ringnut 15 nicht vom vorgesehenen Einbauort verschoben werden.

Eine weitere nicht näher dargestellte Herstellungsart für den ringförmigen Übergangsraum 12 besteht darin, das Innenteil 5 und das Außenteil 4 entlang der Trennlinie 16 etwa auf Höhe der Ringstufe 10 zu teilen und oberen und unteren Ringspalt 6 getrennt herzustellen. Dann werden obere und untere Hälfte zusammengebaut, so daß ein ringförmiger Hohlraum 12 zwischen oberen und unteren Ringspalt 6 verbleibt. Dann kann Übertragungsflüssigkeit 11 eingefüllt werden und der Sensor 8 eingebaut werden.

## Patentansprüche

1. In eine elastische Verbindung zwischen einem starren, kolbenförmigen Innenteil (5) und einem starren, zylinderförmigen Außenteil (4) mit zur Außenmantelfläche des Innenteils komplementärer Kontur integrierbare Kraftmeßeinrichtung (1), wobei zwischen Innenteil (5) und Außenteil (6) ein oberer (6a) und ein unterer enger Ringspalt (6b) mit unterschiedlichem Ringdurchmesser gebildet ist, die mit an den Kontaktflächen fest haftendem, elastomerem Material (7) gefüllt sind und wobei zwischen dem oberen und dem unteren Ringspalt ein Übergangsringraum (12) ausgebildet ist, an den ein Kraft- oder Druckmeßsensor ansetzbar ist, dadurch gekennzeichnet, daß der Übergangsringraum (12) ringsumlaufend zumindest teilweise mit einem hochviskosen bis flüssigen Übertragungsmedium (11), im übrigen mit elastomerem Material (7) gefüllt ist, wobei bevorzugt das Übertragungsmedium (11) in einer als Ringschlauch ausgebildeten flexiblen Hülle (12a) eingeschlossen ist.

2. Kraftmeßeinrichtung nach Anspruch 1, dadurch gekennzeichnet, daß die sich gegenüberliegenden Flächen der Ringstufe (10) konkav ausgerundet sind.

3. Kraftmeßeinrichtung nach Anspruch 1 oder 2, dadurch gekennzeichnet, daß das elastomere Material (7) aus Silikon oder Naturkautschuk besteht und an den Kontaktflächen des oberen und unteren Ringspaltes (6) zwischen dem Innenteil (5) und dem Außenteil (4) fest haftend insbesondere aufvulkanisiert ist.

4. Kraftmeßeinrichtung nach einem der Ansprüche 1, 2 oder 3, dadurch gekennzeichnet, daß der Querschnitt der flexiblen Hülle (12a) größer ist als die Einsetzöffnung (8a) des Kraft- bzw. Druckmeßsensors (8) und die flexible Hülle (12a) die Einsetzöffnung (8a) abdichtet.

5. Kraftmeßeinrichtung nach einem der Ansprüche 1, 2 oder 3, dadurch gekennzeichnet, daß zwischen der flexiblen Hülle (12a) und einer Membran (9) des Kraft- bzw. Druckmeßsensors (8) eine Zwischenschicht (7a) aus dem elastomeren Material (7) vorgesehen ist.

6. Kraftmeßeinrichtung nach einem der Ansprüche 1 bis 5, dadurch gekennzeichnet, daß das Übertragungsmedium (11) aus Silikonöl besteht, das in den Übergangsringraum (12) zwischen oberem und unterem Ringspalt (6) bzw. in den Ringschlauch (12a) eingefüllt ist.

7. Kraftmeßeinrichtung nach einem der Ansprüche 1 bis 6, dadurch gekennzeichnet, daß am Übergangsringraum (12) eine Ringnut (15) zur Aufnahme des Übertragungsmediums (11) angeformt ist.

8. Kraftmeßeinrichtung nach einem der Ansprüche 1 bis 7, dadurch gekennzeichnet, daß der Übergangsringraum (12) durch einen nach dem Aushärten des elastomeren Materials (7) entfernbaren Einsatz (12') gebildet ist.

9. Verfahren zum Herstellen einer Kraftmeßeinrichtung nach einem der vorhergehenden Ansprüche mit den Schritten:
- Einschließen eines hochviskosen bis flüssigen Übertragungsmediums (11) in einer flexiblen Hülle (12a);
- Einlegen der gefüllten Hülle (12a) oder eines aus Silikongel geformten Rings (12b) in den Übergangsringraum (12) zwischen dem Außenteil (4) und dem Innenteil (5);
- Einfüllen eines elastomeren Materials (7) in den oberen und unteren Ringspalt (6) zwischen dem Außenteil (4) und dem Innenteil (5) und anschließendes Aushärten; sowie
- Einsetzen eines Kraft- bzw. Druckmeßsensors (8) in Kontakt mit der flexiblen Hülle (12a) bzw. einer elastomeren Zwischenschicht.

10. Verfahren zum Herstellen einer Kraftmeßeinrichtung nach einem der Ansprüche 1 bis 8 mit den Schritten:
- Einfüllen eines elastomeren Materials (7) in einen unteren Ringspalt (6) bis auf die Höhe des Übergangsringraums (12) und anschließendes Aushärten;
- Wenden des Innen- und Außenteils (4,5) mit bisher oberem Ringspalt (6) nach unten und Einfüllen wie beim ersten Schritt, derart, daß ein hohler Übergangsringraum (12) gebildet wird;
- Einfüllen eines hochviskosen bis flüssigen Übertragungsmediums (11) in den Übergangsringraum (12); und
- Einsetzen eines Kraft- bzw. Drucksensors (8) in Kontakt mit dem Übertragungsmedium (11).

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| D,A | <u>WO - A1 - 89/07 055</u><br>(PFISTER)<br>    * Fig. 2-4; Seite 13, Anspruch 21 *<br>-- | 1,3,9 | G 01 L 1/00<br>G 01 L 5/00 |
| A | <u>EP - A2 - 0 302 437</u><br>(PFISTER)<br>    * Fig. 1-3 *<br>-- | 1,3 | |
| A | <u>US - A - 4 754 653</u><br>(HÄFNER et al.)<br>    * Fig. 2 *<br>---- | 1 | |

RECHERCHIERTE SACHGEBIETE (Int Cl⁵)

G 01 L 1/00
G 01 L 5/00

Der vorliegende Recherchenbericht wurde für alle Patentansprüche erstellt.

| Recherchenort | Abschlußdatum der Recherche | Prüfer |
|---|---|---|
| WIEN | 26-03-1991 | BURGHARDT |